## Europäisches Patentamt

## European Patent Office

## Office européen des brevets

(19)

(11) Veröffentlichungsnummer: **0 222 063**
**B1**

(12)

# EUROPÄISCHE PATENTSCHRIFT

(45) Veröffentlichungstag der Patentschrift:
31.10.90

(51) Int. Cl.⁵: **B65G 65/28, B65G 65/06**

(21) Anmeldenummer: 86110246.5

(22) Anmeldetag: 25.07.86

(54) Vorrichtung zum Austrag von Schüttgut aus einer Halde.

(30) Priorität: 14.11.85 DE 3540391

(43) Veröffentlichungstag der Anmeldung:
20.05.87 Patentblatt 87/21

(45) Bekanntmachung des Hinweises auf die Patenterteilung:
31.10.90 Patentblatt 90/44

(84) Benannte Vertragsstaaten:
**BE DE FR GB IT**

(56) Entgegenhaltungen:
DE-A- 2 846 789
DE-B- 2 828 233
DE-C- 560 438

(73) Patentinhaber: **KRUPP POLYSIUS AG,
Graf-Galen-Strasse 17, D-4720 Beckum(DE)**

(72) Erfinder: **Ahrens, Norbert, Dipl.-Ing., Steinstrasse 11,
D-4740 Oelde(DE)**
Erfinder: **Gnoss, Bernd, Dipl.-Ing., Erlengrund 4,
D-4722 Ennigerloh(DE)**
Erfinder: **Ganss, Werner, Ing. grad., Elisabethstrasse 29,
D-4722 Ennigerloh(DE)**
Erfinder: **Lütke, Hubertus, Klarastrasse 34,
D-4720 Beckum(DE)**

(74) Vertreter: **Tetzner, Volkmar, Dr.-Ing. Dr. jur.,
Van-Gogh-Strasse 3, D-8000 München 71(DE)**

ACTORUM AG

**Beschreibung**

Die Erfindung betrifft eine Vorrichtung entsprechend dem Oberbegriff des Anspruches 1.

Zum Austrag von Schüttgut aus einer Halde werden bisher vielfach Kratzerförderer verwendet, bei denen die Förderelemente durch Kratzschaufeln gebildet werden, die das vom Haldenanschnitt herabrieselnde Material aufnehmen und aus dem Haldenbereich transportieren. Das Schüttgut wird hierbei vor der Kratzschaufel hergeschoben und gewälzt, was bei empfindlichem Gut eine Kornzerstörung mit sich bringt. Nachteilig ist weiterhin der vor allem durch die hohe Reibungsarbeit bedingte beträchtliche Energiebedarf.

Durch die DE-C 560 438 ist weiterhin eine Räummaschine bekannt, deren Förderelemente je aus einem das Gut aufnehmenden, im spitzen Winkel zur Horizontalen angesetzten Teil und aus einem an Ketten befestigten senkrechten Teil bestehen, wobei die senkrechten Teile ein ununterbrochenes Plattenband bilden.

Gegenstand der DE-A1 2 846 789 ist weiterhin ein Entspeicherungsgerät für das Abräumen von Schüttguthalden, bei dem die Förderorgane aus Eimern bestehen, die an ihrem in Förderrichtung vorne liegenden Ende eine Schüttgut-Einlauföffnung und an ihrem rückwärtigen Ende oder am Eimerboden eine Schüttgut-Abwurföffnung aufweisen.

Schließlich ist durch die DE-B2 28 28 233 eine aus dem Oberbegriff des Anspruches 1 entsprechende Vorrichtung bekannt, bei der die als Schaufeln ausgebildeten Förderelemente eine mittige, quer zur Förderrichtung angeordnete, im wesentlichen senkrechte Wand aufweisen, von der aus der horizontale Boden des Förderelementes nach hinten ragt und die als Seitenwände der Schaufel ausgebildeten Führungselemente schräg nach vorneaußen weisen.

Der Erfindung liegt die Aufgabe zugrunde, eine Vorrichtung der im Oberbegriff des Anspruches 1 vorausgesetzten Art so auszubilden, daß - bei zugleich geringem Energiebedarf - ein besonders schonender Transport des Schüttgutes gewährleistet ist.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Bei der erfindungsgemäßen Vorrichtung sind die Förderelemente im vertikalen Querschnitt U-förmig ausgebildet, und das von der Haldenböschung herabrieselnde Schüttgut gelangt durch die in den Seitenwänden der Förderelemente vorgesehenen Guteintrittsöffnungen in die von diesen Förderelementen gebildete, langgestreckte Tragmulde und wird bei der Bewegung des Förderers durch die ortsfest angeordneten sowie in ihrer Länge in Förderrichtung abnehmenden Leitelemente über den Querschnitt der Tragmulde verteilt, so daß sich am Ende der Austragsvorrichtung ein geschlossenes Schüttgutbett in der Tragmulde des Förderers gebildet hat. Nachdem das Schüttgut den Bereich eines Leitelementes verlassen hat, befindet es sich in Ruhe und wird relativ zum Förderer nicht mehr bewegt. Dadurch ist eine besondere Kornschonung beim Guttransport gewährleistet.

Durch die erfindungsgemäß stark verringerte Reibung innerhalb des Schüttgutes ergibt sich eine wesentliche Senkung des Energiebedarfes. Vorteilhaft ist ferner, daß - im Vergleich zu einem bekannten Kratzerförderer beim gleichem Bauvolumen eine wesentlich größere Menge Schüttgut transportiert werden kann.

Ausführungsbeispiele der Erfindung sind in der Zeichnung veranschaulicht. Es zeigen

Fig.1 einen Querschnitt durch eine erfindungsgemäße Vorrichtung,
Fig.2 eine Aufsicht auf ein Förderelement des Förderers,
Fig.3 eine Perspektivansicht von zwei Förderelementen,
Fig.4 einen Horizontalschnitt durch den Förderer (längs der Linie IV-IV in Fig.1),
Fig.5 eine Perspektivansicht eines Details einer Ausführungsvariante.

Die in der Zeichnung veranschaulichte Vorrichtung zum Austrag von Schüttgut aus einer Halde 1 enthält einen Förderer 2, der parallel zu einer Haldenseite endlos umläuft.

Dieser Förderer besitzt eine Vielzahl von Förderelementen 3, die im Vertikal-Querschnitt U-förmig ausgebildet sind und sich zu einer langgestreckten Tragmulde ergänzen.

Die der Halde zugekehrte Seitenwand der Förderer 3 ist mit Guteintrittsöffnungen 4 versehen. Im Bereich dieser Guteintrittsöffnungen 4 sind an der Außenseite der der Halde 1 zugekehrten Seitenwand der Förderelemente 3 pflugartige Hubelemente 5 vorgesehen, die das von ihnen erfaßte Gut auf die Höhe des Bodens der Tragmulde anheben und durch die Guteintrittsöffnungen 4 in das Innere der Tragmulde befördern.

In die Tragmulde greifen von oben ortsfest angeordnete Leitelemente 6 ein, die zur Gutverteilung über den Querschnitt der Tragmulde dienen.

Die Leitelemente 6 sind an einem Tragsystem 7 befestigt, an dem die Förderelemente 3 über Tragrollen 8, 9 aufgehängt und über Führungsrollen 10 geführt sind. Der Verbund der einzelnen Förderelemente 3 wird durch zwei Laschenketten 11, 12 gewährleistet.

Die Breite der Förderelemente 3 (quer zur Bewegungsrichtung - Pfeil 13 - des Förderers) beträgt ein Mehrfaches der Länge der Förderelemente 3 (in Bewegungsrichtung des Förderers).

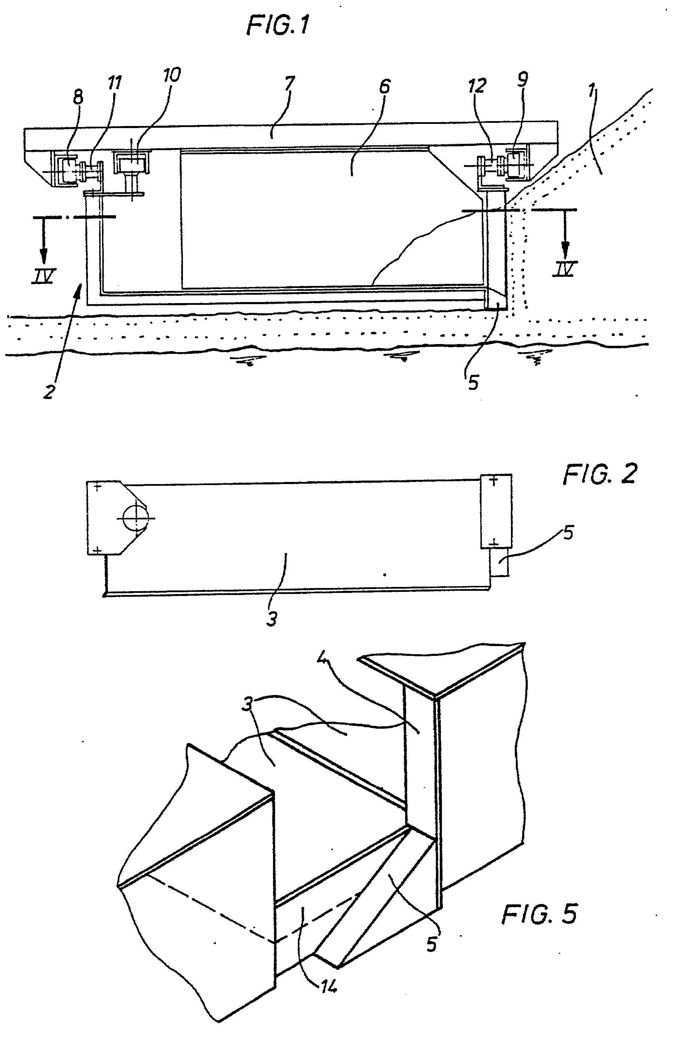

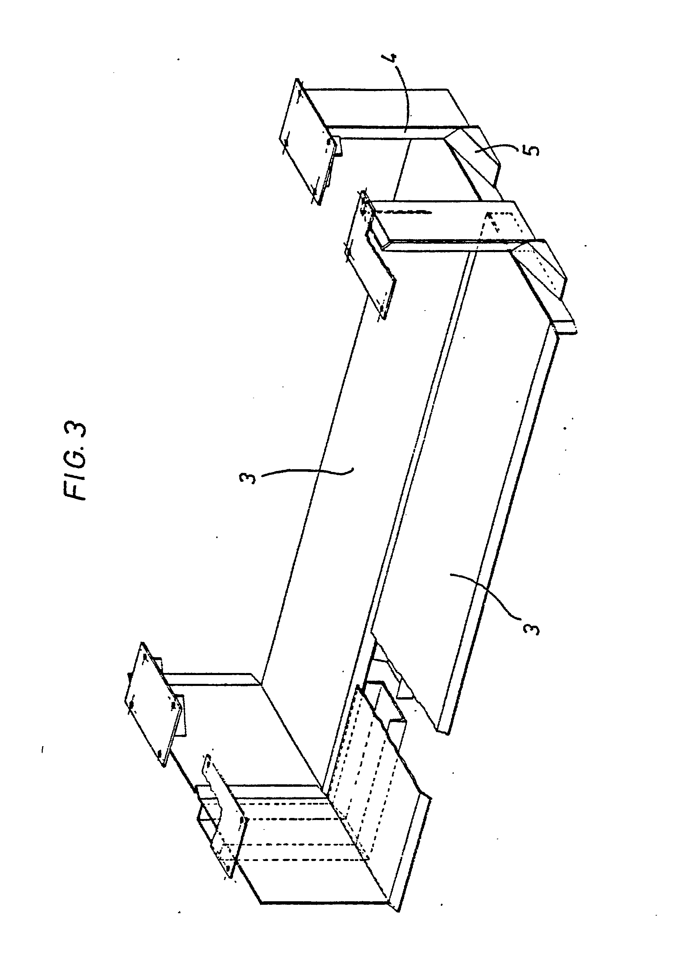

Bei dem in den Fig.1 bis 4 dargestellten Ausführungsbeispiel reichen die Guteintrittsöffnungen 4 bis zum Boden der von den Förderelementen 3 gebildeten Tragmulde. Die pflugartigen Hubelemente 5 reichen mindestens bis zum unteren Rand der Guteintrittsöffnungen 4 (vgl. Fig.3).

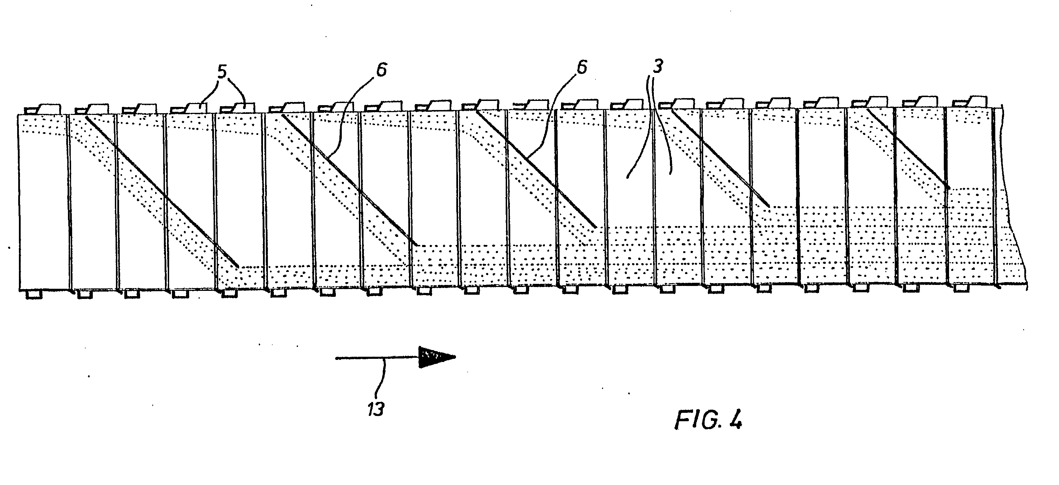

Die Länge der in Förderichtung aufeinanderfolgenden, als Bleche ausgebildeten Leitelemente 6 nimmt ab (vgl. Fig.4). Der Anstellwinkel der Leitelemente 6 gegenüber der Bewegungsrichtung (Pfeil 13) des Förderers ist zweckmäßig einstellbar.

Die Funktion der erfindungsgemäßen Vorrichtung ist damit wie folgt:

Das von der Böschung der Halde 1 herabrieselnde Schüttgut gelangt durch die Guteintrittsöffnungen 4 in die von den Förderelementen 3 gebildete Tragmulde und wird bei der Bewegung des Förderers 2 durch die ortsfest angeordneten Leitelemente 6 in der aus Fig.4 ersichtlichen Weise über den Querschnitt der Tragmulde verteilt. Die einzelnen Leitelemente 6 lenken das Schüttgut mehr oder weniger auf die der Halde abgewandte Seite des Förderers. Die Leitelemente 6 sind dabei so gestaffelt, daß sich am Ende der Austragsvorrichtung in der Tragmulde des Förderers 2 ein geschlossenes Schüttgutbett gebildet hat. Wie aus Fig.4 hervorgeht, bleibt das Schüttgut in Ruhe, sobald es das jeweilige Leitelement 6 verlassen hat.

Die pflugartigen Hubelemente 5 räumen den Weg des Förderers in Haldenrichtung frei. Sie heben das im Wege befindliche Schüttgut an und befördern es durch die Guteintrittsöffnungen 4 in das Innere der Tragmulde.

Der Anstellwinkel der Leitelemente 6 gegenüber der Bewegungsrichtung des Förderers 2 kann je nach Art des Schüttgutes und Fördergeschwindigkeit variiert werden. Ferner können die Leitelemente wahlweise auf eine Gutzuführung von der einen oder anderen Längsseite des Förderers einstellbar sein, so daß sie bei Haldenwechsel (Eintrag des Gutes von der gegenüberliegenden Seite, beispielsweise bei Längsmischbetten) auf die neue Eintragsrichtung ausgerichtet werden können.

In einem solchen Falle werden zweckmäßig beide Seitenwände der Förderelemente 3 mit Guteintrittsöffnungen 4 versehen werden. Diese Guteintrittsöffnungen 4 können verschließbar ausgebildet werden.

Es ist ferner möglich, die Guteintrittsöffnungen 4 oberhalb des Bodens der von den Förderelementen 3 gebildeten Tragmulde enden und bis zu einem die Tragmulde im Bereich der Guteintrittsöffnung 4 begrenzenden Seitenbord 14 reichen zu lassen (vgl. Fig. 5). In diesem Falle kann das Schüttgut in der Tragmulde des Förderers 2 bis zur Höhe des Seitenbord 14 aufgestaut werden, wobei auch hier die pflugartigen Hubelemente 5 mindestens bis zum unteren Rand der Guteintrittsöffnungen 4 reichen.

## Patentansprüche

1. Vorrichtung zum Austrag von Schüttgut aus einer Halde (1) mit einem parallel zu einer Haldenseite endlos umlaufenden Förderer (2), der Förderelemente (3) enthält, deren horizontal ausgerichtete Böden eine Tragfläche für das Schüttgut bilden und deren der Halde zugekehrten Seitenwände Guteintrittsöffnungen (4) freilassen, wobei im Bereich dieser Guteintrittsöffnungen Gutführungselemente (5) vorgesehen sind, die das von ihnen erfaßte Gut in das Innere der Förderelemente (3) befördern, gekennzeichnet durch folgende Merkmale:

a) die Förderelemente (3) sind - in einem vertikalen Querschnitt betrachtet - U-förmig ausgebildet und ergänzen sich zu einer langgestreckten Tragmulde;

b) die an der Außenseite der der Halde (1) zugekehrten Seitenwände der Förderelemente (3) vorgesehenen Gutzuführungselemente sind als pflugartige Hubelemente (5) ausgebildet, die das von ihnen erfaßte Gut auf die Höhe des Bodens der Tragmulde anheben;

c) zur Gutverteilung über den Querschnitt der Tragmulde greifen ortsfest angeordnete, einen Anstellwinkel mit der Bewegungsrichtung des Förderers (2) bildende Leitelemente (6) in die Tragmulde ein;

d) die Länge der in Förderrichtung aufeinanderfolgenden Leitelemente (6) nimmt ab.

2. Vorrichtung nach Anspruch 1, dadurch gekennzeichnet, daß die Breite der Förderelemente (3) quer zur Bewegungsrichtung des Förderers (2) ein Mehrfaches der Länge der Förderelemente in Bewegungsrichtung des Förderers ist.

3. Vorrichtung nach Anspruch 1, dadurch gekennzeichnet, daß die Guteintrittsöffnungen (4) bis zum Boden der Tragmulde reichen.

4. Vorrichtung nach Anspruch 1, dadurch gekennzeichnet, daß die oberhalb des Bodens der Tragmulde endenden Guteintrittsöffnungen (4) bis zu einem die Tragmulde im Bereich der Guteintrittsöffnungen begrenzenden Seitenbord (14) reichen.

5. Vorrichtung nach Anspruch 1, dadurch gekennzeichnet, daß die pflugartigen Hubelemente (5) mindestens bis zum unteren Rand der Guteintrittsöffnungen (4) reichen.

6. Vorrichtung nach Anspruch 1, dadurch gekennzeichnet, daß der Anstellwinkel der Leitelemente (6) gegenüber der Bewegungsrichtung des Förderers (2) einstellbar ist.

7. Vorrichtung nach Anspruch 1, dadurch gekennzeichnet, daß die Leitelemente (6) wahlweise auf eine Gutzuführung von der einen oder anderen Längsseite des Förderes (2) einstellbar sind

8. Vorrichtung nach Anspruch 7, dadurch gekennzeichnet, daß beide Seitenwände der Förderelemente (3) mit Guteintrittsöffnungen (4) versehen sind.

9. Vorrichtung nach Anspruch 8, dadurch gekennzeichnet, daß die Guteintrittsöffnungen (4) wahlweise verschließbar sind.

10. Vorrichtung nach Anspruch 1, dadurch gekennzeichnet, daß die Förderelemente (3) über Trag- und Führungsrollen (8, 9, 10) an einem über dem Förderer (2) angeordneten Tragsystem (7) aufhängt und geführt sind, an dem zugleich die Leitelemente (6) befestigt sind.

## Claims

1. Apparatus for discharging bulk material from a stockpile (1) with a conveyor (2) which runs round continuously parallel to one side of the stockpile and contains conveyor elements (3) in which the horizontally aligned bases form a carrying surface for the bulk material and the side walls facing the stockpile have material inlet openings, material guiding elements (5) being provided in the region of these material inlet openings to convey the material picked up by them into the interior of the conveyor elements (3), characterised by the following features:

a) the conveyor elements (3) are – viewed in a vertical cross-section – of U-shaped construction and combine to form an elongated carrying through;

b) the material guiding elements provided on the outside of the side wall of the conveyor elements (3) facing the stockpile (1) are constructed as plough-like lifting elements (5) which lift the material picked up by them to the height of the base of the varying trough;

c) for distribution of the material over the cross-section of the carrying trough stationary deflectors which form a setting angle with the direction of movement of the conveyor (2) engage in the carrying trough;

d) the length of the deflectors (6) which follow one another in the conveying direction reduces.

2. Apparatus as claimed in claim 1, characterised in that the width of the conveyor elements (3) at right angles to the direction of movement of the conveyor (2) amounts to a multiple of the length of the conveyor elements in the direction of movement of the conveyor.

3. Apparatus as claimed in claim 1, characterised in that the material inlet openings (4) reach as far as the base of the carrying trough.

4. Apparatus as claimed in claim 1, characterised in that the material inlet openings (4) which end above the base of the carrying trough reach as far as one side edge (14) which defines the carrying trough in the region of the material inlet openings.

5. Apparatus as claimed in claim 1, characterised in that the plough-like lifting elements (5) reach at least as far as the lower edge of the material inlet openings (4).

6. Apparatus as claimed in claim 1, characterised in that the setting angle of the deflectors (6) is adjustable with respect to the direction of movement of the conveyor (2).

7. Apparatus as claimed in claim 1, characterised in that the deflectors (6) can be adjusted as required for delivery of material from one or the other long side of the conveyor (2).

8. Apparatus as claimed in claim 7, characterised in that both side walls of the conveyor elements (3) are provided with material inlet openings (4).

9. Apparatus as claimed in claim 8, characterised in that the material inlet openings (4) can be closed if required.

10. Apparatus as claimed in claim 1, characterised in that the conveyor elements (3) are suspended and guided by means of bearing and guide rollers (8, 9, 10) on a support system (7) on which the deflectors (8) are also fixed.

**Revendications**

1. Dispositif de reprise au tas (1) de matière en vrac, comprenant un convoyeur (2) se déplaçant en circuit fermé sans fin parallèlement à un côté du tas et comportant des éléments transporteurs (3) dont le fond horizontal forme une surface de support de la matière en vrac et dont les cloisons latérales tournées vers le tas de matière laissent subsister des ouvertures (4) d'entrée de la matière, des éléments (5) de guidage de la matière, qui sont prévus dans la zone de ces ouvertures d'entrée, transférant la matière qu'ils emmènent à l'intérieur des éléments transporteurs (3), caractérisé par les particularités suivantes :

a) les éléments transporteurs (3) ont un profil en étrier - considérés en coupe verticale transversale - et forment avec leurs compléments une benne allongée,

b) les éléments de guidage de la matière, qui sont prévus sur le côté extérieur des cloisons latérales des éléments transporteurs (3) qui sont tournées vers le tas (1), sont conformés en éléments élévateurs (5) en forme de soc de charrue qui soulèvent la matière qu'ils emmènent pour la mettre au niveau du fond de la benne ;

c) des déflecteurs (6) montés en position fixe, inscrivant un angle d'inclinaison avec la direction du déplacement du convoyeur (2) et destinés à répartir la matière sur la section de la benne, pénètrent dans cette dernière ;

d) la longueur des déflecteurs (6) qui se succèdent dans le sens du convoyage est décroissante.

2. Dispositif selon la revendication 1, caractérisé en ce que la largeur des éléments transporteurs (3) perpendiculairement à la direction du déplacement du convoyeur (2) est un multiple de la longueur de ces éléments dans la direction du déplacement du convoyeur.

3. Dispositif selon la revendication 1, caractérisé en ce que les ouvertures (4) d'entrée de la matière atteignent le fond de la benne.

4. Dispositif selon la revendication 1, caractérisé en ce que les ouvertures (4) d'entrée de matière, qui se terminent au-dessus du fond de la benne, atteignent un rebord latéral (14) qui délimite la benne dans la zone des ouvertures d'entrée de matière.

5. Dispositif selon la revendication 1, caractérisé en ce que les éléments élévateurs (5) en forme de soc de charrue atteignent au moins le bord inférieur des ouvertures (4) d'entrée de matière.

6. Dispositif selon la revendication 1, caractérisé en ce que l'angle d'inclinaison des déflecteurs (6) par rapport à la direction du déplacement du convoyeur (2) est réglable.

7. Dispositif selon la revendication 1, caractérisé en ce que les déflecteurs (6) sont réglables au choix pour une admission de matière par l'un ou l'autre des côtés longitudinaux du convoyeur (2).

8. Dispositif selon la revendication 7, caractérisé en ce que les deux cloisons latérales des éléments transporteurs (3) comportent des ouvertures (4) d'entrée de matière.

9. Dispositif selon la revendication 8, caractérisé en ce que les ouvertures (4) d'entrée de la matière sont obturables de manière sélectionnable.

10. Dispositif selon la revendication 1, caractérisé en ce que les éléments transporteurs (3) sont suspendus à un système porteur (7) disposé au-dessus du convoyeur (2) et guidant ces éléments (3) au moyen de galets et de rouleaux de support et de guidage (8, 9, 10), les déflecteurs (6) étant eux-mêmes fixés à ce système porteur (7).

## FIG.1

## FIG. 2

## FIG. 5

*FIG. 3*

FIG. 4

EP 0 222 063 B1